# EUROPEAN PATENT APPLICATION

(11) **EP 2 837 444 A1**
(43) Date of publication of application: **18.02.2015**
(21) Application number: 13275183.5
(22) Date of filing: 14.08.2013
(51) Int. Cl.: B22F 3/105, B22F 7/06, B29C 67/00, G06K 19/08

(54) **Object production**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed are methods and apparatus for producing an object (2, 40) for performing a primary function. The method comprises: providing an amount of material, and constructing, by Additive Manufacturing apparatus (8, 50), from the material, the object (2, 40) such that at least part of a security feature (6, 44 is included in the object (2, 40). The security feature (6, 44) does not contribute to the performance by the object (2, 40) of the primary function. The presence of the security feature (6, 44) in the object (2, 40) is detectable using a predetermined detection process. The security feature (6, 44) is indicative of the produced object (2, 40) having one or more pre-specified properties such that properties of the object (2, 40) may be ascertained by detecting the presence of the security feature (6, 44) in the produced object (2, 40).

## Description

### FIELD OF THE INVENTION

The present invention relates to the production of objects or parts of objects.

### BACKGROUND

Additive Manufacturing (AM) processes (also known as Additive Layer Manufacture (ALM), 3D printing, etc.) are processes that may be used to produce functional, complex objects, layer by layer, without moulds or dies. Typically, such processes include providing material (e.g. metal or plastic) in the form of a powder or a wire, and, using a powerful heat source such as a laser beam, electron beam or an electric, or plasma welding arc, melting an amount of that material and depositing a layer of the melted material (e.g. on a base plate of a work piece). Subsequent layers are then built up upon each preceding layer.

Example AM processes include, but are not limited to, Laser Blown Powder, Laser Powder Bed, and Wire and Arc technologies.

AM processes may be used to produce accurate copies of objects.

### SUMMARY OF THE INVENTION

In a first aspect, the present invention provides a method of producing an object. The object is for performing a primary function. The method comprises providing an amount of a first material, and performing, by an Additive Manufacturing apparatus, an Additive Manufacturing process to construct, from the provided first material, the object layer by layer. The constructing of the object comprises including, in the object, by the Additive Manufacturing apparatus, at least part of a security feature. The security feature does not contribute to the performance by the object of the primary function. The presence of the security feature in the object is detectable using a predetermined detection process. The security feature is indicative of the produced object having one or more pre-specified properties such that one or more properties of the object may be ascertained by detecting the presence of the security feature in the produced object.

The security feature may include a cavity. The cavity may be a closed cavity.

Constructing the object may comprise: performing, by the Additive Manufacturing apparatus, an Additive Manufacturing process to construct, from the first material, an initial object, the initial object comprising an open cavity; and sealing with the first material, by the Additive Manufacturing apparatus using an Additive Manufacturing process, an opening of the cavity so as to provide the closed cavity.

The method may further comprise, prior to the step of sealing, inserting a physical item into the cavity, the physical item being made of a second material, the second material being a different material to the first material.

The shape of the cavity and the shape of the physical item may be complementary.

The first material may be a plastic.

The Additive Manufacturing process may be a Material Extrusion process, for example, a Fused Deposition Modelling process.

The security feature may comprise a region made of a third material, the third material being a different material to the first material.

The region may be exposed at an external surface of the produced object.

The first material may be a metal. The Additive Manufacturing process may be a Directed Energy Deposition (DED) process.

The detection process may be a non-destructive detection process e.g. a process selected from the group of detection processes consisting of an X-ray process and an ultrasound process.

Each of the one or more pre-specified properties of which the security feature is indicative may be a property selected from the group of properties consisting of: a property that specifies a manufacturer of the object; a property that specifies an identity of the Additive Manufacturing apparatus; a property that specifies an identity of the Additive Manufacturing process; a property that specifies a batch number of the object; a property that specifies an object type of the object; a property that specifies a serial number of the object; a property that specifies an owner of the object; tolerances to which the object has been manufactured; a property that specifies the first material; a property that specifies the primary function of the object; and material properties of the object.

The size of the security feature relative to the overall size of the produced object may be small such that the material properties of the at least part of the object are substantially the same as those of a further object, the further object being exactly the same size and shape of the object and made entirely of the first material.

Preferably, the security feature is not visible with a human eye from an external surface of the produced object.

In a further aspect, the present invention provides a method of determining one or more properties of an object. The method comprises: providing an object, the object having been produced in accordance with any of the above aspects; performing a detection process so as to detect the presence of the security feature within the provided object; and, in response to detecting presence of the security feature within the object, determining that the object has the one or more pre-specified properties of which the security feature is indicative.

In a further aspect, the present invention provides apparatus for producing an object. The object is for performing a primary function. The apparatus comprises: Additive Manufacturing apparatus configured to perform an Additive Manufacturing process to construct, from a provided amount of a first material, the object layer by layer. The Additive Manufacturing apparatus is further configured to include, in the object, at least part of a security feature. The security feature does not contribute to the performance by the object of the primary function. The presence of the security feature in the object is detectable using a predetermined detection process. The security feature is indicative of the produced object having one or more pre-specified properties such that one or more properties of the object may be ascertained by detecting the presence of the security feature in the produced object.

### BRIEF DESCRIPTION OF THE DRAWINGS

Figure 1 is a schematic illustration (not to scale) showing a cross-section of a first object;
Figure 2 is a process flow chart showing certain steps in a process of producing the first object;
Figure 3 is a schematic illustration (not to scale) showing a first additive manufacturing apparatus;
Figure 4 is a schematic illustration (not to scale) showing a cross-section of an initial object.
Figure 5 is a schematic illustration (not to scale) showing a cross-section of an assembly;
Figure 6 is a further schematic illustration (not to scale) showing a cross-section of the first object;
Figure 7 is a schematic illustration (not to scale) showing a cross-section of a second object;
Figure 8 is a process flow chart showing certain steps in a process of producing the second object; and
Figure 9 is a schematic illustration (not to scale) showing a second additive manufacturing apparatus.

### DETAILED DESCRIPTION

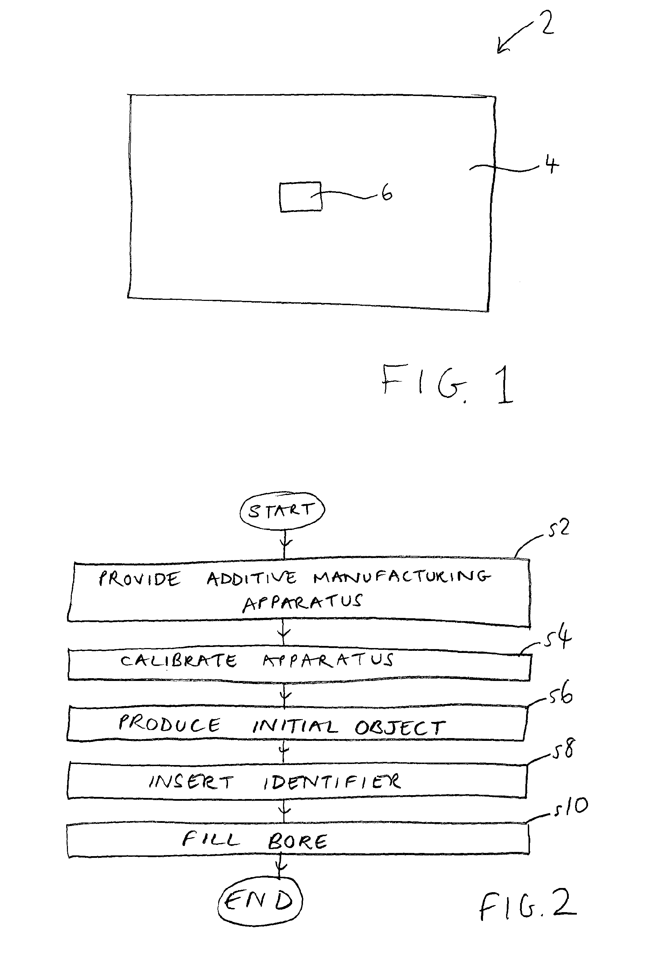

Figure 1 is a schematic illustration (not to scale) showing a cross-section of a first object 2. A method of producing the first object 2 is described in more detail later below with reference to Figure 2.

The first object 2 may be any appropriate type of physical object, for example, a component part of a device or machine, such as an aircraft. In this embodiment, the first object 2 comprises a first object body 4 and a first identifier 6.

In this embodiment, the first object body 4 is made of plastic. The first object body 4 is made using an additive manufacturing (AM) process as described in more detail later below with reference to Figure 2.

In this embodiment, the first identifier 6 is a solid physical item that is embedded in the first object body 4. The first identifier 6 is made of metal e.g. titanium, aluminium, or stainless steel. Preferably, the first identifier 6 is made of a material and is of a size such that the first identifier 6 can be detected within the first object body 4 using a non-destructive process, such as an X-ray process or an ultrasound process.

In this embodiment, the dimensions of the first identifier 6 are 12mm x 7mm x 1 mm. However, in other embodiments, the first identifier 6 is a different size, for example a smaller size e.g. 0.25mm x 0.25mm x 0.25mm.

The first object body 4 may have any appropriate dimensions such that the first identifier 6 is fully encased by the first object body 4.

In this embodiment, the first identifier 6 is a means by which a manufacturer of the first object 2 may verify that the first object 2 was manufactured by them. In some embodiments, a manufacturer detects the presence of the first identifier 6 within the first object 2 and, thereby, determines that the first object 2 was manufactured by them. Similarly, a manufacturer may determine that the first identifier 6 is not present within an object and so determine that that object was not manufactured by them.

This advantageously tends to provide that counterfeit objects may be distinguished from genuine objects. Counterfeit objects may be produced cheaply (e.g. using an AM process) and may be of a lower standard or quality than a genuine object. Thus, a counterfeit object may be more likely to fail in use than a genuine object. Failure of an object may be dangerous and/or disruptive. Thus, by detecting a counterfeit object and replacing that counterfeit object with a genuine object, a likelihood of a failure occurring tends to be reduced.

If for example an object were to fail in use, an object manufacturer may determine whether or not they did indeed manufacture that failed object. If it is determined that the object manufacturer did indeed manufacture that failed object, the object manufacturer may then update their manufacturing processes, materials, or object designs so as to decrease the likelihood of future objects failing. If however it is determined that the object manufacturer did not manufacture that failed object, the object manufacturer may inform the party who used the failed object that the failed object is a counterfeit object. The party who used the failed object may then act to avoid further (possible disruptive or dangerous) failures. For example, all systems which implement an object supplied from the supplier of the failed object may be recalled.

Preferably, the presence of the first identifier 6 within the first object 2 is detectable, e.g. by the manufacturer of that first object 2, using a non-destructive process, such as an X-ray process or an ultrasound process. This advantageously tends to allow the identifier to be detected, e.g. by the manufacturer of the first object 2, without damaging the first object 2. However, in some embodiments, the presence of the first identifier 6 within the first object body 4 is not detectable using a non-destructive process, and the first object 2 has to be destroyed to determine whether or not the first identifier 6 is present.

The first identifier 6 may be an item the shape of which may be known only to the manufacturer of the first object 2. The manufacturer may keep the shape of the first identifier 6 confidential. Also, the manufacturer may keep the location of the first identifier 6 within the first object body 4 (which may be determined during the below described manufacturing process) confidential. Also, the manufacturer may keep details of the process by which the first identifier 6 can be detected within the first object body 4 confidential. By keeping details of the identifiers embedded in his or her objects confidential, a manufacturer tends to make production of an identical object, e.g. by counterfeiters, difficult.

Preferably, the first identifier 6 is not visible to the naked eye from the outside of the first object body 4. For example, the first object body 4 may be made of an opaque plastic. This tends to make detection of the first identifier 6 in the first object 2, e.g. by a party who does not know the exact location, size, shape etc. of the first identifier 6, difficult. This tends to make production of an identical object, e.g. by counterfeiters, difficult.

Preferably, the first identifier 6 has a relatively complex shape. This tends to ensure that the copying of the first identifier 6 and/or the first object 2, for example, by a counterfeiter, is difficult. The first identifier 6 may be produced using any appropriate process such as an AM process, which tend to be particularly useful for producing items having relatively complex shapes. In some embodiments, the first identifier 6 is produced using a laser cutting machine.

Preferably, the first identifier 6 does not adversely affect any performance related properties of the first object 2. For example, preferably a likelihood of failure of the first object 2 during use is not significantly increased by the presence of the first identifier 6. This may, for example, be provided by the first identifier 6 being relatively small in relation to the first object body 4, the first identifier 6 having a predetermined position within the first object body 4, the first identifier 6 having a predetermined orientation within the first object body 4, etc.

Preferably, the first identifier 6 is uniquely associated with the manufacturer of the first object 2. In other words, other manufacturers of similar objects do not embed, in the objects that they produce, identifiers that have that same shape as the first identifier 6. Instead, other manufacturers of similar objects embed, in the objects that they produce, only identifiers that have a different shape to that of the first identifier 6.

In some embodiments, the first identifier 6 comprises, represents or indicates information that is specific to the first object 2, the manufacturer of the object, or a type of the first object 2. For example, the shape of the first identifier 6 may be uniquely associated with the first object 2, e.g. the first identifier 6 may include an embossed serial number or bar code that is uniquely associated with the first object 2. Also for example, the shape of the first identifier 6 may be uniquely associated with a certain type of object, e.g. certain components may all include the same shaped identifiers. Also for example, the shape of the first identifier 6 may be uniquely associated with a batch number for the object.

In some embodiments, the manufacturer of the first object 2 stores information relating to the first object 2 (including but not limited to the object type, an object purpose, the owner of the first object 2, the type of manufacturing process used to produce the first object 2, the date of production of the first object 2, the tolerances to which the first object 2 was manufactured, material properties of the first object 2, and the materials from which the first object 2 is made) alongside details of the first identifier 6 of that first object 2 (e.g. the serial number included in the first identifier 6). This advantageously tends to provide that, for example, if in use the first object 2 was to fail, the object manufacturer or other party may ascertain information about that first object 2 (e.g. production processes etc.). This information may be used to, for example, update or modify manufacturing process or recall faulty batches of objects.

In some embodiments, the first identifier 6 may be a magnetic object. The presence of the first identifier 6 in the first object 2 may then be detected using a device for detecting magnetic fields.

In some embodiments, the first identifier 6 may include an RFID tag, which may be detected by a RFID reader.

In some embodiments, the first identifier 6 may include an "electrical sealed for life" device that is able to respond to a given electrical/electromagnetic signal.

Figure 2 is a process flow chart showing certain steps in an embodiment of a process of producing the first object 2.

At step s2, a first additive manufacturing (AM) apparatus is provided.

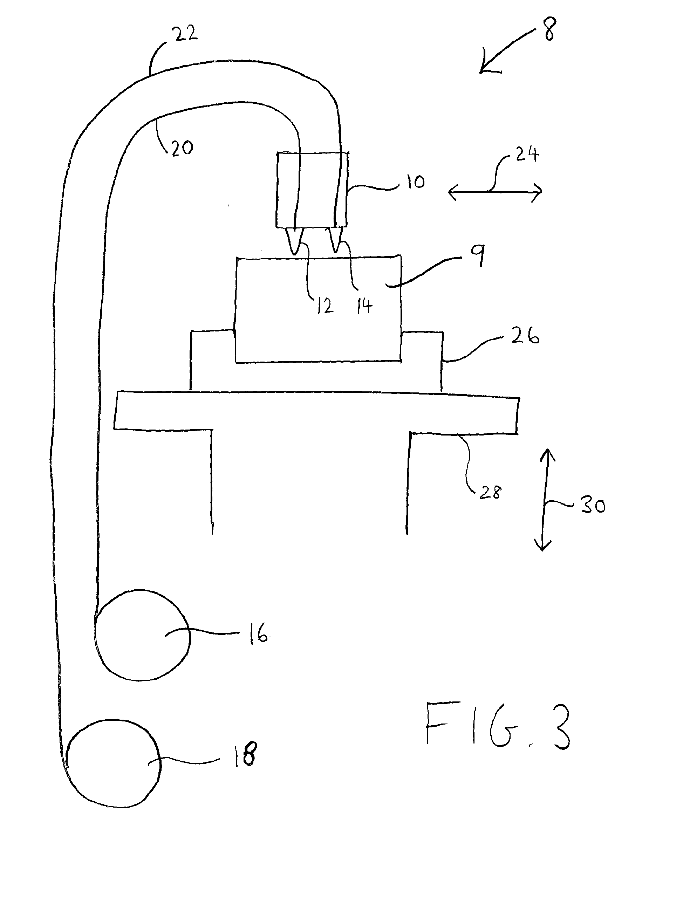

Figure 3 is a schematic illustration (not to scale) showing the first AM apparatus 8 that is to be used in the production of the first object 2.

In this embodiment, the first AM apparatus 8 is initially used to produce an "initial object" which is indicated in Figure 3 by the reference numeral 9.

In this embodiment, the first AM apparatus 8 is a Material Extrusion apparatus (for example, an apparatus for performing a Fused Deposition Modelling (FDM) process). In operation, the first AM apparatus performs an AM process, in particular a Material Extrusion process, to produce the initial object 9.

The first AM apparatus 8 comprises a heat source 10 coupled to a first nozzle 12 and a second nozzle 14. The first AM apparatus 8 further comprises a source of plastic material in the form of a spool or coil of plastic filament (herein after referred to as the "first spool" 16), and a source of a disposable support material in the form of a spool or coil of support material filament (herein after referred to as the "second spool" 18).

In operation, plastic material is unwound from the first spool 16 and is fed, via a first delivery line 20, to the heat source 10. Also, support material is unwound from the second spool 18 and is fed, via a second delivery line 22, to the heat source 10. The heat source 10 melts the received material. The melted plastic material is extruded from the first nozzle 12 under the control of a computer (not shown in the Figures) as a layer of plastic material. Thus, layers of plastic material are laid down so as to build the initial object 9. Similarly, where desired, the melted support material is extruded from the second nozzle 14 under the control of a computer (not shown in the Figures) as a layer of support material, which may later be removed from the object.

In operation, many layers of plastic material are laid down beside one another and built on top of each other to form the initial object 9.

In this embodiment, the nozzles 12, 14 are moveable under the control of the computer in the X-Y plane that is parallel to an upper surface of the initial object 9. A direction in the X-Y planes is indicated in Figure 3 by a double headed arrow and the reference numeral 24.

In this embodiment, the initial object 9 is built upon a support structure 26 from which it may later be removed. The support structure 26 is mounted to a build platform 28 that is moveable under the control of the computer vertically in the Z direction (which is indicated in Figure 3 by the double-headed arrow and the reference numeral 30). Thus, the nozzles 12, 14 may be directed to any point in a working envelope in the X-Y plane and vertically so as to accommodate both work pieces of different height and also regions of different height within work pieces.

At step s4, the first AM apparatus 8 is calibrated.

This calibration process may, for example, include providing or creating a three dimensional digital model of the initial object 9 that is to be produced by the first AM apparatus 8. This digital model may be used to generate a "tool path" that will be followed by the first AM apparatus 8 during the Material Extrusion process. A "dry run" (i.e. a process in which the first AM apparatus 8 is moved along the tool path without applying heating or feedstock) may be performed to establish that a geometrical clash condition does not exist.

Optionally, values of further parameters of the Material Extrusion process may also be determined prior to production of the initial object 9, for example, by using the first AM apparatus 8 to produce a test item. For example, a feedstock flow rate and the X-Y positioning of the first AM apparatus 8. The determined parameter values may be used to determine whether or not the first AM apparatus 8 is functioning within a specified tolerance range.

In this embodiment, the calibration of the first AM apparatus 8 remains the same throughout the Material Extrusion process, i.e. the first AM apparatus 8 is not re-calibrated during the Material Extrusion process. However, in some embodiments, the first AM apparatus 8 is re-calibrated during the Material Extrusion process, for example if the Material Extrusion process is interrupted, e.g. by a power cut or mechanical failure.

At step s6, using the first AM apparatus 8 and by performing the Material Extrusion process, the initial object 9 is produced. After produced of the initial object 9, the Material Extrusion process is paused.

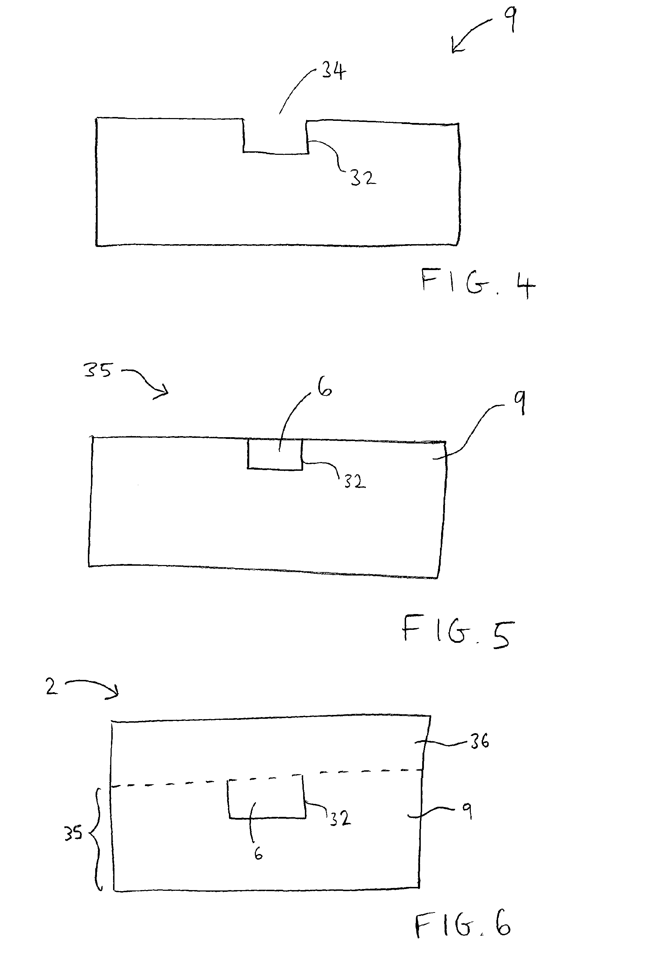

Figure 4 is a schematic illustration (not to scale) showing a cross-section of the initial object 9.

In this embodiment, the initial object 9 comprises a cavity 32. The initial object 9 is made of plastic.

The shape of the initial object 9 is substantially the same as that of a lower portion of the first object 2 that is being produced.

In this embodiment, the cavity 32 is an open cavity. In other words, the cavity comprises an opening 34. In this embodiment, the opening 34 of the cavity 32 is at an upper surface of the initial object 9. In this embodiment, the cavity 32 is located within the initial object 9 at a position at which the first identifier 6 is to be located.

At step s8, the first identifier 6 is inserted into the cavity 32 through the cavity opening 34. The initial object 9 and the first identifier 6 positioned in the cavity 32 are hereinafter jointly referred to as the "assembly".

Figure 5 is a schematic illustration (not to scale) showing a cross-section of the assembly 35.

In this embodiment, the shape of the cavity 32 and the shape of the first identifier 6 are complementary such that the cavity 32 is entirely filled by the first identifier 6. However, in other embodiments, the shape of the cavity 32 and the shape of the first identifier 6 are not complementary; for example, the first identifier 6 does not entirely fill the cavity 32.

At step s10, the Material Extrusion process is resumed so as deposit further layers of material onto the assembly 35, thereby producing the first object 2 of Figure 1.

Figure 6 is a schematic illustration (not to scale) showing a cross-section of the assembly 35 and the further layers of plastic material 36 that are deposited onto the assembly 35.

In this embodiment, the further layers of material 36 are added to the assembly by the first AM apparatus 8 so as to seal the opening 34 of the cavity 32. Thus, the first identifier 6 is embedded in the first object 2.

Thus, an embodiment of a process of producing the first object 2 is provided.

A further embodiment will now be described.

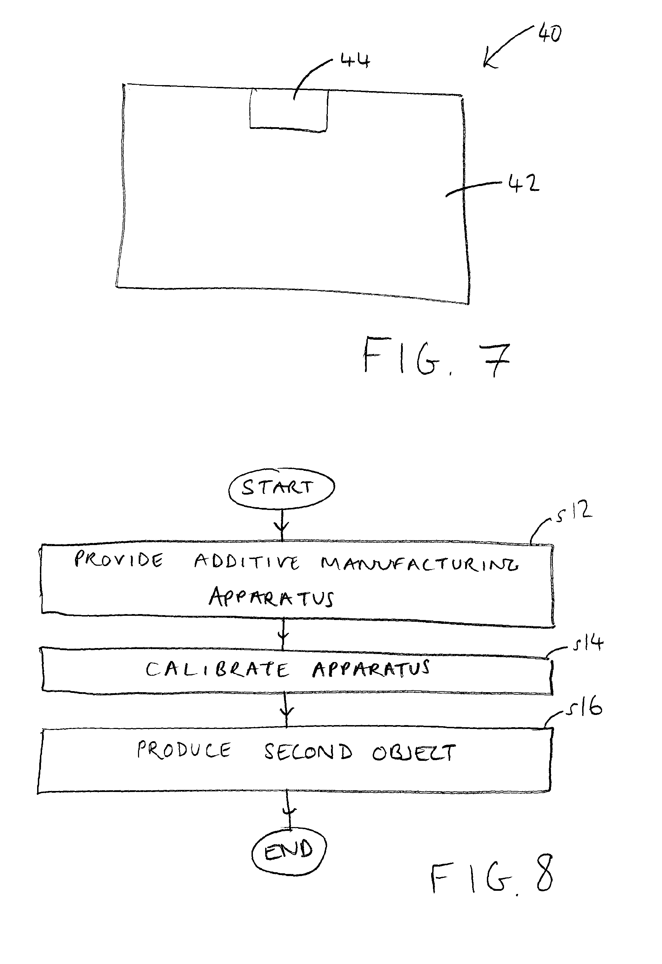

Figure 7 is a schematic illustration (not to scale) showing a cross-section of a second object 40. A method of producing the second object 40 is described in more detail later below with reference to Figure 8.

The second object 40 may be any appropriate type of physical object, for example, a component part of a device or machine, such as an aircraft. In this embodiment, the second object 40 comprises a second object body 42 and a second identifier 44.

In this embodiment, the second object body 42 is made of metal. The second object body 42 may have any appropriate dimensions. The second object body 42 is made using an AM process as described in more detail later below with reference to Figure 8.

In this embodiment, the second identifier 44 is located at an external surface of the second object 40 such that the second identifier 44 is exposed at that external surface. In this embodiment, the dimensions of the second identifier 44 are 12mm x 7mm x 1 mm. However, in other embodiments, the second identifier 44 is a different size, for example a smaller size e.g. 0.25mm x 0.25mm x 0.25mm.

In this embodiment, the second identifier 44 is a region of the second object 40 that has a different chemical composition to that of the second object body 42. Thus, the second identifier 44 can be distinguished from the second object body 42. Thus, the presence of the second identifier 44 can be detected e.g. by a manufacturer of the second object 40. In this embodiment, the second identifier 44 is made of a different type of material to the material from which the second object body 42 is made. For example, in some embodiments, the second object body 42 is made of a specific metal or alloy and the second identifier 44 is made of a different metal or an alloy having a different composition to that of the second object body 42. Also for example, in some embodiments, the second identifier 44 is made of a material that comprises a certain proportion of a relatively rare or expensive material that is not present in the second object body 42. Also for example, in some embodiments, the second identifier 44 comprises a fluorescent substance that fluoresces under e.g. ultraviolet (UV) light.

In this embodiment, the second identifier 44 is a means by which a manufacturer of the second object 40 may verify that the second object 40 was manufactured by them. A manufacturer may detect the presence of the second identifier 44 within the second object 40 and, thereby, determines that the second object 40 was manufactured by them. Similarly, a manufacturer may determine that the second identifier 44 is not present within an object and so determine that that object was not manufactured by them.

Preferably, the presence of the second identifier 44 in the second object 40 is detectable, e.g. by the manufacturer of that second object 40, using a non-destructive process, such as by using a scanning electron microscope or shining a UV light onto the external surface of the second object 40. This advantageously tends to allow the second identifier 44 to be detected, e.g. by the manufacturer of the second object 40, without damaging the second object 40. However, in some embodiments, the presence of the second identifier 44 within the second object body 42 is not detectable using a non-destructive process, and the second object 40 has to be destroyed to determine whether or not the second identifier 44 is present.

In some embodiments, the shape of the second identifier 44 may be known only to the manufacturer of the second object 40. The manufacturer may keep the shape of the second identifier 44 confidential. Also, the manufacturer may keep the location of the second identifier 44 within the second object body 42 (which may be determined during the below described manufacturing process) confidential. Also, the manufacturer may keep details of the process by which the second identifier 44 can be detected within the second object body 42 confidential. By keeping details of the identifiers in his or her objects confidential, a manufacturer tends to make production of an identical object, e.g. by counterfeiters, difficult.

Preferably, to the naked human eye, the appearance of the second identifier 44 is substantially the same as that of the second object body 42. In other words, preferably, the second identifier 44 is, to the human eye, indistinguishable from the second object body 42. This tends to make detection of the second identifier 44 in the second object 40, e.g. by a party who does not know the exact location, size, shape etc. of the second identifier 44, difficult. This tends to make production of an identical object, e.g. by counterfeiters, difficult.

Preferably, the shape of the second identifier 44 on the external surface of the further object 40 is a relatively complex shape. This tends to ensure that the copying of the second identifier 44 and/or the second object 40, for example, by a counterfeiter, is difficult.

Preferably, the second identifier 44 does not adversely affect any performance related properties of the second object 40. For example, preferably a likelihood of failure of the second object 40 during use is not significantly increased by the presence of the second identifier 44. This may, for example, be provided by the second identifier 44 being relatively small in relation to the second object body 42, the second identifier 44 having a predetermined position within the second object body 42, the second identifier 44 having a predetermined orientation within the second object body 42, etc.

Preferably, the second identifier 44 is uniquely associated with the manufacturer of the second object 40. In other words, other manufacturers of similar objects do not include, in the objects that they produce, identifiers that have that same shape as the second identifier 44. Instead, other manufacturers of similar objects include, in the objects that they produce, only identifiers that have a different shape to that of the second identifier 44.

In some embodiments, the second identifier 44 comprises, represents or indicates information that is specific to the second object 40, the manufacturer of the object, or a type of the second object 40. For example, the shape of the second identifier 44 may be uniquely associated with the second object 40, e.g. the second identifier 44 may specify a serial number or bar code that is uniquely associated with the second object 40. Also for example, the shape of the second identifier 44 may be uniquely associated with a certain type of object, e.g. certain components may all include the same shaped identifiers. Also for example, the shape of the second identifier 44 may be uniquely associated with a batch number for the object.

In some embodiments, the manufacturer of the second object 40 stores information relating to the second object 40 (including but not limited to the object type, an object purpose, the owner of the second object 40, the type of manufacturing process used to produce the second object 40, the date of production of the second object 40, the tolerances to which the second object 40 was manufactured, material properties of the second object 40, and the materials from which the second object 40 is made) alongside details of the second identifier 44 (e.g. the serial number specified by the second identifier 44). This advantageously tends to provide that, for example, if in use the second object 40 was to fail, the object manufacturer or other party may ascertain information about that second object 40 (e.g. production processes etc.). This information may be used to, for example, update or modify manufacturing process or recall faulty batches of objects.

Figure 8 is a process flow chart showing certain steps in an embodiment of a process of producing the second object 40.

At step s12, a second additive manufacturing (AM) apparatus is provided.

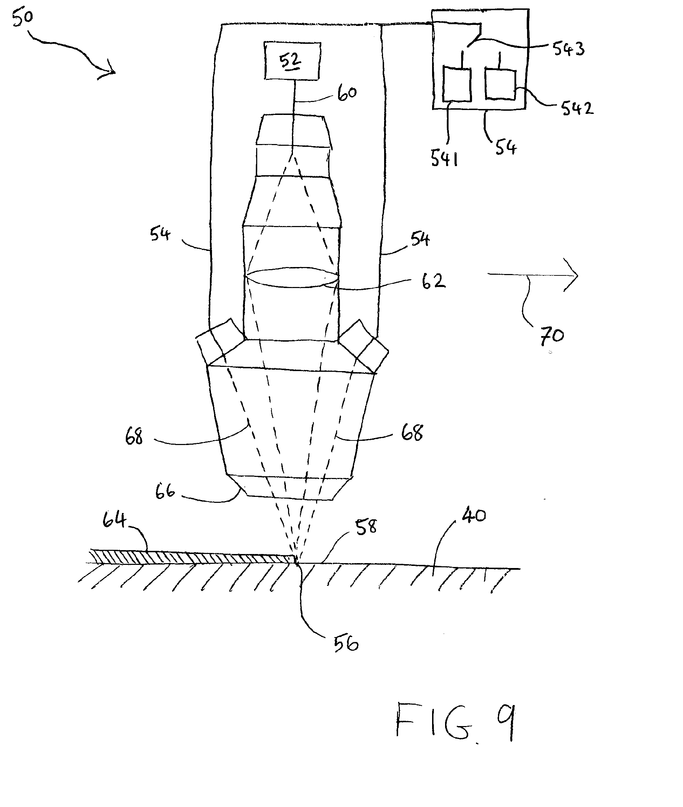

Figure 9 is a schematic illustration (not to scale) showing the second AM apparatus 50 that is to be used in the production of the second object 40.

In this embodiment, the second AM apparatus 50 is a Directed Energy Deposition (DED) apparatus. In operation, the second AM apparatus 50 performs an AM process, in particular a DED process, to produce the second object 50. Examples of DED processes include, but are not limited to, Direct Metal Deposition (DMD), Direct Laser Melting (DLM), Direct Laser Sintering (DLS), Laser Engineering Net Shape (LENS), Wire Additive Manufacture Material (WAMMAT), Selective Laser Melting (SLA), and Supersonic Particle Deposition (SSPD).

The second AM apparatus 50 comprises a heat source in the form of a high powered laser 52, a source of plastic material in the form of a powder delivery system 54. In some embodiments, the second AM apparatus 50 further comprises cooling means in the form of a forced cooling nozzle (not shown in the Figure).

The laser 52 may be any appropriate type of laser that may operate at any appropriate wavelength and have any appropriate continuous wave power output.

In operation, the laser 52 is focused upon a focal point 56 on an upper surface 58 of the second object 40 (or, initially, the blank) whereby to melt the surface 58 to form a weld pool. The laser 52 is controlled by a computer (not shown in the Figures) to deliver a laser beam via an optical fibre 60 to conventional focussing optics 62 which focus the laser beam to the focal point 56 on the upper surface 58 of the item being produced.

In operation, the powder delivery system 54 delivers metallic powder to the vicinity of the laser focal point 56. Thus, the metallic powder is fully melted as it is deposited on the surface 58 to form a layer or bead 64. The powder grains may, for example, have a diameter between 36 µm and 568 µm. The powder delivery system 54 delivers metallic powder through a deposition nozzle 66, along a plurality of delivery lines 68 which may be disposed symmetrically around the deposition nozzle 66. In other embodiments, a different type of material (e.g. a plastic powder or a ceramic) may be used instead of the metallic powder.

In this embodiment, the powder delivery system 54 comprises two powder reservoirs. A first of the powder reservoirs 541 contains powder from which the second object body 42 is to be made. A second of the powder reservoirs 542 contains powder from which the second identifier 44 is to be made. The powder delivery system 54 further comprises a valve 543 (e.g. a mixer valve) operable to switch from a first state in which powder from only the first reservoir 541 is delivered to the deposition nozzle 66 to a second state in which powder from only the second reservoir 542 is delivered to the deposition nozzle 66.

In this embodiment, the second AM apparatus 50 is moveable under the control of the computer in the X-Y plane that is parallel to the surface 58 of the second object 40, and vertically in the Z direction orthogonal to the surface 58. Thus, the laser focal point 56 may be directed to any point in a working envelope in the X-Y plane and vertically so as to accommodate both work pieces of different height and also regions of different height within work pieces. In other words, in this embodiment, the second AM apparatus 50 is a 3-axis AM machine. In other embodiments, the second AM apparatus 50 is a different type of AM machine, e.g. a 5-axis AM machine.

During operation, the second AM apparatus 50 moves in a traverse direction, relative to the second object 40, which is indicated by an arrow 70.

In operation, the bead 64 may be cooled to a solidified state using a forced cooling gas nozzle e.g. using air or a cryogenic spray jet.

In operation, many beads are laid down beside one another and built on top of each other to form the second object 40.

At step s14, the second AM apparatus 50 is calibrated.

This calibration process may, for example, include providing or creating a three dimensional digital model of the second object 40 that is to be produced by the second AM apparatus 50. This digital model may be used to generate a "tool path" that will be followed by the second AM apparatus 50 during the DED process. A "dry run" (i.e. a process in which the second AM apparatus 50 is moved along the tool path without applying heating or feedstock) may be performed to establish that a geometrical clash condition does not exist, and/or also to ascertain as to whether or not the focal length of a laser 52 of the second AM apparatus 50 is correct.

Optionally, values of further parameters of the AM process may also be determined prior to production of the second object 40, for example, by using the AM apparatus to produce a test item. For example, a laser power density, a feedstock flow rate, X-Y positioning of the second AM apparatus 50, and a melt pool temperature, etc. may be determined. The determined parameter values may be used to determine whether or not the second AM apparatus 50 is functioning within a specified tolerance range.

In this embodiment, the calibration of the second AM apparatus 50 remains the same throughout the DED process, i.e. the second AM apparatus 50 is not re-calibrated during the DED process. However, in some embodiments, the second AM apparatus 50 is re-calibrated during the AM process, for example if the AM process is interrupted, e.g. by a power cut or mechanical failure.

At step s16, using the second AM apparatus 50 and by performing a DED, the second object 40 is produced.

In this embodiment, the production of the second object 40 comprises constructing the second object body 42 from powder contained within the first powder reservoir 541 and constructing the second identifier 44 from powder contained within the second powder reservoir 542. In this embodiment, the valve 543 is controlled by the computer such that, for a given stage of the DED process, the powder delivery system 54 delivers the correct type of powder to the deposition nozzle 56.

Thus a method of producing the second object 40 is provided.

The above described methods and apparatus advantageously implement AM processes to produce objects having integral identifiers. The above described methods and apparatus are advantageously equally applicable to instances in which AM process are implemented to add new features to existing objects. An identifier may be embedded within the additional new feature.

It should be noted that certain of the process steps depicted in the flowchart of Figures 2 and 8 and described above may be omitted or such process steps may be performed in differing order to that presented above and shown in Figures 2 and 8. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the first object is made of plastic. Also, the second object is made of metal. However, in other embodiments the first object is made of one or more different materials, for example metal or ceramic, instead of or in addition to plastic. Also, the second object may be made of a different material.

In the above embodiments, the AM process used to produce the first object is a Material Extrusion process, such as a Fused Deposition Modelling (FDM) process. The apparatus used to produce the first object is a Material Extrusion apparatus. Also in the above embodiments, the AM process used to produce the second object is a laser blown powder Directed Energy Deposition (DED) process in which powder is blown onto a weld pool on an object that has been created by a laser. The apparatus used to produce the second object is a DED apparatus. However, in other embodiments, an object may be produced using a different type of AM process and a different type of AM apparatus. Examples of AM processes that may be used in other embodiments include, but are not limited to, Material Extrusion processes, Material Jetting processes, Binder Jetting processes, Sheet lamination processes, Vat Photopolymerisation processes, Powder bed fusion processes, and Directed Energy Deposition processes.

In the above embodiments, the first identifier is made of metal and has the above described dimensions. However, in other embodiments the first identifier is made of one or more different materials, for example plastic or ceramic, instead of or in addition to metal. Also, in other embodiments, the first identifier may have a different size and/or shape to that described above.

In the above embodiment, the first object comprises a single identifier. Also, the second object comprises a single further identifier. However, in other embodiments, an object may comprise a plurality of identifiers. In some embodiments, an object comprises one or more first identifiers and one or more second identifiers. In some embodiments, identifiers are spaced apart from one another within the object. Also, in some embodiments, the identifiers within an object are all exactly the same as one another. Thus, if an identifier of an object becomes damaged (e.g. misshapen), the object may still be identified using a different, non-damaged identifier embedded within it. Alternatively, one or more of the identifiers embedded in the object may be different to another identifier embedded in the same object. In some embodiments, the arrangement of the plurality of identifiers within the object may be used to distinguish genuine objects from counterfeit objects.

In the above embodiments, an identifier provides means by which a manufacturer of an object may verify that that object was manufactured by them. In some embodiments, a different party (i.e. a party other than the manufacturer of the object, e.g. a user or owner of the object) may use an identifier to verify which manufacturer the object was manufactured by. For example, the party may detect (e.g. using a non-destructive process such as X-raying or using ultrasound) the presence of an identifier within an object and determine that the object was manufactured by the manufacturer associated with that identifier. Thus, a party is advantageously able to verify that an object has been produced by a certain manufacturer and is not a lower quality object produced by a different party (e.g. a counterfeiter).

In the above embodiments, the first identifier is a physical object that is different to the first object body and is embedded within the first object body. However, in other embodiments, the first identifier is a different type of feature. For example, in some embodiments, the first identifier is one or more closed cavities within the first object body. In other words, an identifier for an object may be cavity within that object that does not have an opening. In some embodiments, a closed cavity has a shape that is uniquely associated with the object manufacturer, the object type, or the object. In some embodiments, the arrangement of a plurality of closed cavities is uniquely associated with the object manufacturer, the object type, or the object. In some embodiments, the one or more closed cavities comprise, represent, or indicate information that is specific to the object, the manufacturer of the object, or a type of the object. In some embodiments, the object is produced by implementing an AM process to build the object body layer by layer, leaving a closed cavity within the object body. Preferably, the shape of a closed cavity within the object body is relatively complex.

In the above embodiments, the second identifier comprises physical material disposed onto the second object body. However, in other embodiments, the second identifier is a different type of feature. For example, in some embodiments, the second identifier is one or more open cavities located at or proximate to an external surface of the second object body. In other words, an identifier for an object may be a cavity within that object that has an opening at an external surface of that object. In some embodiments, an open cavity has a shape that is uniquely associated with the object manufacturer, the object type, or the object. In some embodiments, the arrangement of a plurality of open cavities is uniquely associated with the object manufacturer, the object type, or the object. In some embodiments, the one or more open cavities comprise, represent, or indicate information that is specific to the object, the manufacturer of the object, or a type of the object. In some embodiments, the object is produced by implementing an AM process to build the object body layer by layer, leaving an open cavity within the object body. Preferably, the shape of an open cavity within the object body is relatively complex.

## Claims

1. A method of producing an object (2, 40), the object (2, 40) being for performing a primary function, the method comprising:
providing an amount of a first material; and
performing, by Additive Manufacturing apparatus (8, 50), an Additive Manufacturing process to construct, from the provided first material, the object (2, 40) layer by layer; wherein
the constructing of the object (2, 40) comprises including, in the object (2, 40), by the Additive Manufacturing apparatus (8, 50), at least part of a security feature (6, 44);
the security feature (6, 44) does not contribute to the performance by the object (2, 40) of the primary function;
the presence of the security feature (6, 44) in the object (2, 40) is detectable using a predetermined detection process; and
the security feature (6, 44) is indicative of the produced object (2, 40) having one or more pre-specified properties such that one or more properties of the object (2, 40) may be ascertained by detecting the presence of the security feature (6, 44) in the produced object (2, 40).

2. A method according to claim 1, wherein the security feature (6, 44) comprises a cavity.

3. A method according to claims 2, wherein the cavity is a closed cavity.

4. A method according claim 3, wherein the constructing of the object (2, 40) comprises:
performing, by the Additive Manufacturing apparatus (8, 50), an Additive Manufacturing process to construct, from the first material, an initial object (9), the initial object comprising an open cavity (32); and
sealing with the first material, by the Additive Manufacturing apparatus (8, 50) using an Additive Manufacturing process, an opening (34) of the cavity (32) so as to provide the closed cavity.

5. A method according to claim 4, the method further comprising, prior to the step of sealing, inserting a physical item (6) into the cavity (32), the physical item (6) being made of a second material, the second material being a different material to the first material.

6. A method according to claim 5, wherein the shape of the cavity and the shape of the physical item (6) are complementary.

7. A method according to any of claims 1 to 6, wherein the first material is a plastic, and the Additive Manufacturing process is a Material Extrusion process.

8. A method according to claim 1, wherein the security feature (6, 44) comprises a region (44) made of a third material, the third material being a different material to the first material.

9. A method according to claim 8, wherein the region (44) is exposed at an external surface of the produced object (2, 40).

10. A method according to any of claim 1, 8 or 9, wherein the first material is a metal, and the Additive Manufacturing process is a Directed Energy Deposition process.

11. A method according to any of claims 1 to 10, wherein the detection process is a non-destructive detection process selected from the group of detection processes consisting of an X-ray process and an ultrasound process.

12. A method according to any of claims 1 to 11, wherein each of the one or more pre-specified properties of which the security feature (6, 44) is indicative is a property selected from the group of properties consisting of: a property that specifies a manufacturer of the object (2, 40); a property that specifies an identity of the Additive Manufacturing apparatus (8, 50); a property that specifies an identity of the Additive Manufacturing process; a property that specifies a batch number of the object (2, 40); a property that specifies an object type of the object (2, 40); a property that specifies a serial number of the object (2, 40); a property that specifies an owner of the object (2, 40); tolerances to which the object (2, 40) has been manufactured; a property that specifies the first material; a property that specifies the primary function of the object (2, 40); and material properties of the object (2, 40).

13. A method according to any of claims 1 to 12, wherein the size of the security feature (6, 44) relative to the overall size of the produced object (2, 40) is sufficiently small such that the material properties of the object are substantially the same as those of a further object, the further object being exactly the same size and shape of the object (2, 40) and made entirely of the first material.

14. A method of determining one or more properties of an object (2, 40), the method comprising:
providing the object (2, 40), the object (2, 40) having been produced in accordance with a method of any of claims 1 to 13;
performing a detection process so as to detect the presence of the security feature (6, 44) within the object (2, 40); and
in response to detecting presence of the security feature (6, 44) within the object (2, 40), determining that the object (2, 40) has the one or more pre-specified properties of which the security feature (6, 44) is indicative.

15. Apparatus for producing an object (2, 40), the object (2, 40) being for performing a primary function, the apparatus comprising:
an Additive Manufacturing apparatus (8, 50) configured to perform an Additive Manufacturing process to construct, from a provided amount of a first material, the object (2, 40) layer by layer; wherein
the Additive Manufacturing apparatus (8, 50) is further configured to include, in the object (2, 40), at least part of a security feature (6, 44);
the security feature (6, 44) does not contribute to the performance by the object (2, 40) of the primary function;
the presence of the security feature (6, 44) in the object (2, 40) is detectable using a predetermined detection process; and
the security feature (6, 44) is indicative of the produced object (2, 40) having one or more pre-specified properties such that one or more properties of the object (2, 40) may be ascertained by detecting the presence of the security feature (6, 44) in the produced object (2, 40).
